Europäisches Patentamt
European Patent Office
Office européen des brevets

(19)

(11) Publication number: **0 451 353 A1**

(12) # EUROPEAN PATENT APPLICATION

(21) Application number: **90124101.8**

(51) Int. Cl.5: **B01D 71/56**, B01D 67/00

(22) Date of filing: **13.12.90**

(30) Priority: **11.04.90 IT 1999590**

(43) Date of publication of application:
**16.10.91 Bulletin 91/42**

(84) Designated Contracting States:
**DE FR IT**

(71) Applicant: **SEPAREM S.p.A.**
**Via per Oropa 118**
**I-13051 Biella (Vercelli)(IT)**

(72) Inventor: **Petrocchi, Enidio**
**Viale Macallè 37**
**I-13051 Biella (Vercelli)(IT)**
Inventor: **Gaeta, Soccorso**
**Via Repubblica 8**
**I-13055 Occhieppo Inferiore (Vercelli)(IT)**
Inventor: **Drioli, Enrico**
**Via A. Falcone 153**
**I-80127 Napoli(IT)**

(74) Representative: **Forattini, Amelia et al**
**c/o Internazionale Brevetti Ingg. ZINI, MARANESI & C. S.r.l. Piazza Castello 1**
**I-20121 Milano(IT)**

(54) **Polypiperazinamide-based reverse-osmosis membranes and post-treatment process for their preparation.**

(57) The process comprises a chemical-physical post-treatment which allows to obtain reverse-osmosis membranes with high flow, high rejection and high stability. The post-treatment is performed after the following steps: a) preparation of a polypiperazinamide solution in an original polar solvent; b) application of the solution on a support or drawing in the form of a hollow fiber; c) partial evaporation of the original solvent; d) gelling by phase reversal by passage through a coagulation bath.

FIG. 1

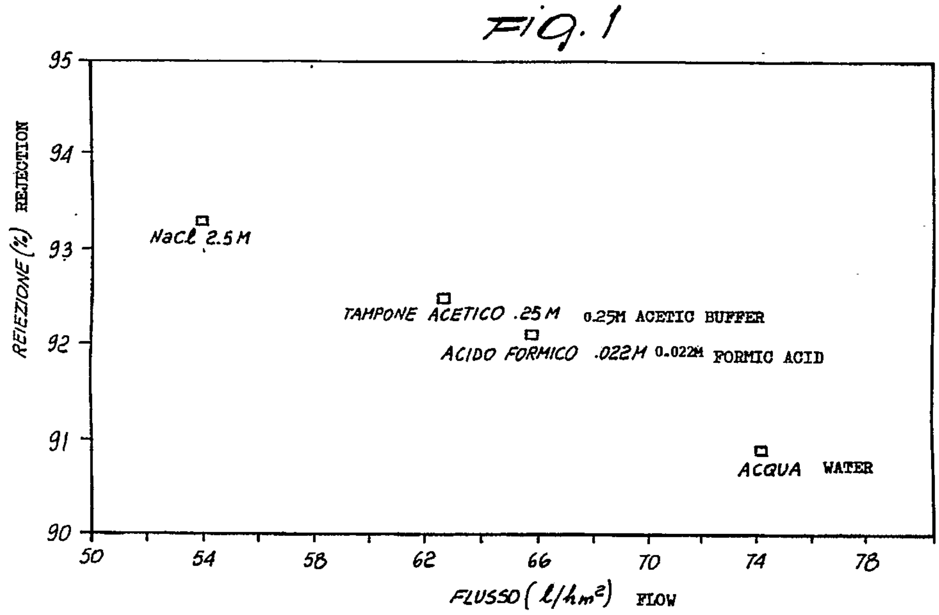


EP 0 451 353 A1

The present invention relates to reverse-osmosis membranes and to a process for their preparation. In particular, the field of the present invention relates to planar membranes which are asymmetrical with respect to the plane which bisects the membrane halfway through its thickness. The field of the present invention furthermore relates to membranes based on polypiperazinamides, this term describing all the products of the polycondensation of piperazine or of piperazine with alkyl substitution in the ring, possibly mixed with other diamines, with anhydrides or dichlorides of aliphatic saturated or unsaturated, aromatic or heterocyclic di-carboxylic acids, such as for example fumaric acid, mesaconic acid, hexanedioic acid, phthalic acid, isophthalic acid, phthalic acids with substitution in the aromatic nucleus or heterocyclic acids derived from furan, thiofuran, pyridine, thiophene and the like, either separately or mixed with one another. Polypiperazinamide-based membranes which belong to the field of the present invention are obtained by means of a process in which polypiperazinamide is dissolved in an original polar solvent, the solution thus obtained is applied on a generally planar or tubular support or is drawn in the shape of a hollow fiber, the original solvent is partially evaporated under the action of a flow of air and the membrane is then gelled by passing in a coagulation bath.

Polypiperazinamide solutions are for example prepared in heated shakers which are appropriately set so that the temperature of the solution is not higher than 35 °C and is not lower than 10 °C. The preparation of the solution generally comprises the loading of the original solvent, the gradual addition of the polymer and agitation. The agitation time is preferably shorter than 10 hours.
The solution is filtered with a filtering mesh under a head of inert gas. The filtered solution is allowed to degas until the gas bubbles present therein are eliminated. The solution filtration and degassing operations are very important for the subsequent preparation of membranes which are homogeneous, mechanically resistant and stable in the course of time.

The polymer has an intrinsic viscosity at 20 °C in tetrachloroethane which is preferably comprised between 2.0 and 2.7 dl/g or between 1.6 and 2.0 dl/g in formic acid. The characteristics of intrinsic viscosity and therefore of molecular weight of the polymer are very important for the preparation of membranes which are mechanically resistant and are suitable for preparing rolled-spiral modules. The humidity content of the polymer is less than 0.5%. The solutions are prepared preferably by using an original polar solvent chosen in class "s" of H.Burrel's classification. Said original solvent is preferably formic acid. The concentration of the polymer in the polymeric solution thus obtained is comprised between 10% and 30% by weight and preferably between 16% and 19% by weight.

For the production of planar membranes, the degassed solution is applied continuously on a support. The thickness of the film of solution applied on the support varies for example between 50 and 300 microns depending on the required membrane characteristics. The nascent membrane advances for a certain extent in a controlled environment in which a partial evaporation of the original solvent occurs. The partial evaporation time is preferably comprised between 60 and 250 seconds; the rate of application of the membrane varies preferably between 0.3 m/min and 2 m/min; the temperature of the support is preferably comprised between 15 and 28 °C; the relative humidity of the partial evaporation region is preferably in excess of 80%. The temperature of the air of the partial evaporation region is preferably comprised between 15 and 28 °C. The flow of the air overlying the planar support of the membrane produces such a speed as to provide Reynolds numbers preferably comprised between 10 and 20. The Reynolds numbers are expressed by $Re = cvd/u$, where v is the relative speed of the air with respect to the planar body of the nascent membrane, c is the density, d is the equivalent diameter, and u is the viscosity.

After advancement in the partial evaporation region, the nascent membrane is immersed in a coagulation bath, where phase reversal is completed. The coagulation bath preferably contains demineralized water with an initial conductivity of less than 20 microSiemens at 20 °C. The temperature of the coagulation bath is preferably lower than 15 °C more preferably lower than 5 °C and even more preferably lower than 3 °C. The immersion time is preferably comprised between 15 minutes and 25 minutes. The pH of the bath is preferably in excess of 2.

The above is in summary the main field of industrial utilization of the invention; said field, however, does not constitute a limitation of its scope, since the membranes and the process according to the invention, in particular as described and claimed hereinafter, can be advantageously used in any other equivalent field in which reverse-osmosis membranes are prepared by means of solubilization and phase-reversal.

Membranes of this type are known for example from the Italian patent application No. 21852 A/87. However, it has been observed in practice that said membranes, though they achieve, in industrial production, average rejections of 92-93%, have inconstant rejections, if these are assessed for each individual membrane, which can vary between approximately 89 and 96%. Said known membranes furthermore achieve the final rejection and flow characteristics only after prolonged use, and must undergo a long washing process which increases production time.

The aim of the present invention is therefore to overcome the above disadvantages and provide an asymmetrical polypiperazinamide-based membrane which has an increase in the value of average rejection and a greater containment of the distribution of the rejection values of the individual manufactured membranes.

An object of the invention is to achieve a high mechanical resistance of the membranes, so as to allow machining by folding so as to form modules of membrane rolled in a spiral without the overall properties of the membrane undergoing appreciable deterioration.

Another object of the invention is to improve the reproducibility characteristics of the process for preparing the membranes, so that said process can be performed even by operators having no particularly high skill.

Another object of the invention is to provide membranes which allow to immediately obtain the final rejection and flow characteristics.

Not least object of the invention is to reduce process times by reducing the long periods due to washing.

This aim, these objects and others are achieved by reverse-osmosis membranes according to the present invention, which are characterized in that they can be obtained with a chemical-physical post-treatment of the freshly formed membrane, based on an aqueous solution which acts by extracting the original solvent of the membrane and substitutes it at least partially in the structure of the membrane.

This allows the molecules of the membrane a certain mutual mobility which surprisingly gives rise to a readjustment of said molecules toward a more compact and stable structure.

According to a first embodiment of the invention, the aqueous solution is diluted solution of a strong solvent of the polymer. The concentration of the strong solvent is preferably comprised between 0.05 and 0.3 mol/liter. Suitable strong solvents are for example formic acid, diethylene oxide, methacrosol, ethylene chlorohydrin, dimethylacetamide, n-methylpyrrolidone, dimethylformamide, trichloroacetic acid.

According to a second embodiment of the invention, the aqueous solution is based on a high-concentration solution of electrolytes. The concentration is preferably comprised between 5% and 30% by weight. Suitable electrolytes are for example halides, nitrates, sulphates of alkali or alkaline earth metals. According to this embodiment, the post-treatment produces a variation in the characteristics of the membrane, and in particular a decrease in flows and an increase in rejection are observed.

According to a third preferred embodiment of the invention, the aqueous solution is a buffer solution of an organic acid which is a weak solvent of the membrane. The term "weak solvent organic acid" is used to describe a chemical species in which the polymer is soluble only at low concentrations; in particular it describes all those compounds which cause the polymer to expand. Said weak solvent organic acid is preferably chosen among saturated or unsaturated aliphatic organic acids, such as acetic acid, propionic acid, butyric acid, isobutyric acid, acrylic acid, methacrylic acid or aromatic ones such as benzoic acid and the like. The preferred weak solvent organic acid is acetic acid.

The buffer solution of the weak solvent organic acid has a pK which is preferably comprised between 4 and 10 and more preferably comprised between 4.5 and 6, a molar concentration comprised between 0.1 and 5 and more preferably comprised between 0.1 and 1, and a temperature comprised between 0 and 40 °C and more preferably comprised between 15 and 25 °C. The contact time between the buffer solution and the freshly formed membrane is at least 0.1 minutes, preferably at least 1 minute.

Advantageously, the original solvent of the membrane used to dissolve the polypiperazinamide solution is formic acid; in this case the above described buffer solution causes a particularly rapid extraction of the original solvent by means of the almost complete transformation of the formic acid into formate anions, which are no longer compatible with the polymeric matrix of the membrane. Formic acid is in fact subjected to the balance:

$$HCOOH \rightleftharpoons HCOO^{-} + H^{+}$$

which is offset to the right proportionally to the pH value. The extraction of the formic acid and its partial replacement with a weak solvent organic acid improves rejection, makes the membrane more elastic and therefore less subject to fracture triggering phenomena due to the mechanical stress induced by the curving of the membrane itself during the preparation of a rolled-spiral module.

With all of said three embodiments, the membranes according to the invention can be used to obtain rolled-spiral modules and in particular are sufficiently elastic and therefore less subject to fracture triggering phenomena arising from the mechanical stress induced by the curvature of said membrane during the preparation of a rolled-spiral module.

As an alternative, the membranes can be applied on a tubular support so as to form tubular membranes.

As an alternative, the membranes can be formed in the shape of a hollow fiber, according to per se known spinning methods.

The process for the preparation of polypiperazinamide membranes according to the present invention comprises the following steps:

a) preparation of a solution of polypiperazinamide in an original polar solvent;
b) application of said solution on a support or spinning in the form of a hollow fiber;
c) partial evaporation of the original solvent;
d) gelling by phase reversal by passage through a coagulation bath;
e) chemical-physical post-treatment.

The chemical-physical post-treatment is provided using solvents or solutions as described above. More in particular, said treatment lasts in excess of 0.1 minutes and preferably in excess of 1 minute.

The temperature of the post-treatment step is preferably comprised between 0 and 40 °C and more preferably between 15 and 25 °C.

The present invention will become apparent from the following examples, which are given merely by way of non-limitative example of the invention.

Some results obtained using different chemical-physical post-treatments are illustrated in figure 1, which shows the flow and rejection of membranes treated with formic acid at a diluted concentration (0.022 M), sodium chloride in concentrated solution (2.5 M), buffer solution of acetic acid (0.25 M), compared with the membrane washed with water, which is not a part of the present invention. The treatments were performed at room temperature and at the specified concentrations.

It can be seen that the rejection of the membrane obtained with a chemical-physical post-treatment is higher than that of the membrane washed with water, even if the chemical-physical treatment lasts only a few minutes, whereas washing with water requires at least 3 hours. The membrane washed with water is furthermore more fragile with respect to the membranes according to the invention, which are more elastic and easier to handle.

The best results in terms of elasticity of the membrane, duration of the post-treatment and non-reversibility of the characteristics of the membrane occur by means of post-treatment with a buffer solution of an organic acid, preferably acetic acid.

As regards rejection, membranes according to the invention have, on the average, a saline rejection equal to 95%, with peaks of even 98%, whereas membranes washed with water have an average rejection of 92-93% with a much greater distribution of values and much lower minimum values.

The membranes obtained were used to prepare rolled-spiral membrane modules which were characterized in standard conditions.

Fig. 2 shows the trend, in the course of time, of the rejection of modules prepared with membranes obtained by means of a post-treatment with a buffer solution of acetic acid and with membranes washed with water. It is quite evident that the modules prepared with membranes according to the invention behave much better than those prepared with a membrane washed simply with water.

The elasticity improvement action generated by the acetic acid buffer solution is more evident in the test of figure 3, which relates to already-rolled modules and clearly shows that the membranes according to the invention, in particular with a post-treatment based on a buffer solution of acetic acid, besides having an improved rejection also have better elasticity and mechanical resistance during the step of wrapping on the modules. In fact, whereas the rejection loss caused by the stress produced during the preparation of rolled-spiral membrane modules is sharp for membranes which are simply washed with water, surprisingly membranes with a post-treatment based on a buffer solution of acetic acid according to the invention indeed have a further increase in rejection after rolling on the module. These results are illustrated in figure 3, which plots the percentage variation of rejection (PVR) between the planar membrane and the module.

EXAMPLE 1 for comparison

20 g of 2.5-transmethyl-piperazine-thiofurazan-polyamide (which has an intrinsic viscosity of 2 dl/g in formic acid) are solubilized in 100 g of formic acid at room temperature. The solution is agitated for 10 hours at 20 °C and then filtered on a filter with 5-micron porosity, degassed under vacuum, applied in a 200-micron-thick film on a non-woven polyester fabric at a speed of 0.3 m/min at 20 °C. The relative humidity in the region of partial evaporation of the original solvent is 80% and the speed of the air over the applied solution is such as to establish fluidodynamic conditions characterized by a Reynolds number of 15. The thickness of the polymeric film is 100 microns. The coagulation bath is water characterized by a conductivity of 20 microSiemens/cm at 20 °C. The temperature of the bath is 0.5 °C and the time of permanence in the bath is 20 minutes.

The washing of the membrane with water is performed with running water at room temperature for three hours in order to completely remove the residual original solvent.

The membrane thus prepared is characterized in an osmosis cell with a solution which contains 2000 ppm of sodium chloride at a pressure of 30 atm and at a temperature of 25 °C for 3 hours.

The following results are obtained: a flow of 74.2 l/h/m² and a saline rejection of 90.9%.

Example 2

Three sheets of membrane prepared according to example 1, with the exception that washing with water is not performed, are immersed in the three solutions listed in Table 1 for 24 hours and at room temperature.

Without further treatment, the membrane is characterized in the manner described in example 1.

TABLE 1 Post-treatments performed on membrane as it is and characterization of post-treated membranes

| Example | Post-treatment | Flow $l/h/m^2$ | Saline rejection % |
|---|---|---|---|
| 2A | acetic buffer, 0.25 M | 62.7 | 95.1 |
| 2B | HCOOH, 0.022 M | 65.8 | 92.1 |
| 2C | NaCl, 2.5 M | 53.9 | 93,3 |
| 1 | Water | 74.2 | 90.9 |

The membrane treated according to the invention has, in each case, an increase in rejection and a decrease in flow.

The reduction in flow value is very sharp in the case of the NaCl solution.

EXAMPLE 3

A sheet of membrane prepared as described in example 1 is left in contact with solution 2B as described in example 2 for 100 hours at room temperature.

It has been observed that for this time of contact the membrane has both a rejection which is lower than the initial one (90.2%) and a decrease in flow (63 $l/h/m^2$), differently from what is observed in example 2.

EXAMPLE 4

The membrane prepared according to example 1 is treated with solution 2A at room temperature for 700 hours. No significant change with respect to the result of example 2 is observed.

Stabilization and improvement of the rejection characteristics in the case of the acetic buffer are preserved in the course of time.

EXAMPLE 5 for comparison

To check the effect of the post-treatment on the preparation of the modules, the membrane prepared according to example 1 is assembled in a 4-inch spiral rolled membrane module.

The module, fed with a 2000 ppm NaCl solution, is characterized at a pressure of 30 atm and a temperature of 35 °C and has the following characteristics: 400 l/h flow and 90.6% rejection.

If the ratio between the rejection of the module and that of the membrane of example 1 is defined as a percentage variation of rejection (PVR), a value of -0.33% is observed in this case.

EXAMPLE 6 for comparison

The membrane prepared according to example 1, at the end of the coagulation step, is assembled in a 4-inch module without washing with water and without chemical-physical post-treatment. The module characterized in the manner of example 5 has a flow of 435 l/h and a saline rejection of 84.2%.

Failure to completely extract the original solvent leads to a high concentration of formic acid in the membrane (approximately 5 $g/m^2$) and to a markedly negative effect on the module's rejection (PVR = -7.3%).

EXAMPLE 7

The membrane prepared according to example 1 is placed, at the end of the coagulation step, in contact with solution 2A for at least 24 hours, then assembled in a 4-inch module. The module characterized in the manner described in example 5 has a flow of 360 l/h and a saline rejection of 95%.

In this case, the module's rejection characteristics are improved even with respect to the membrane described in example 1 without resorting to long washes with water.

A PVR of +4.5% is in fact observed.

EXAMPLE 8

The membrane prepared according to example 1 is placed, at the end of the coagulation step, in contact with solution 2B for 24 hours, then assembled in a 4-inch module. Characterization of the module in the manner described in example 5 leads to a flow of 390 l/h and to a saline rejection of 86%.

Formic acid exerts a negative effect on the membrane not only according to time and concentration but also by means of the mechanical stress induced by the curving of said membrane; the value of PVR is in fact -5.3%.

EXAMPLE 9

The membrane prepared according to example 1 is washed with water at the end of the coagulation step and is then placed in contact with solution 2C for 24 hours. The module characterized in the manner described in example 5 yields a flow of 365 l/h and a rejection of 87%.

The effect of the high-concentration sodium chloride solution is different from the one observed on the planar membrane. In this case the value of PVR is -3.8%.

| Example | Solution in contact | Flow $l/h/m^2$ | Saline rejection % | PVR % |
|---|---|---|---|---|
| 5 | water | 400 | 90.6 | -.33 |
| 6 | - | 435 | 84.2 | -7.3 |
| 7 | 0.25 M acetic buffer | 360 | 95.0 | +4.5 |
| 8 | HCOOH 0.022 M | 390 | 86 | -5.3 |
| 9 | 2.5 M NaCl | 365 | 87.4 | -3.8 |

In practice it has been observed that according to the invention it is possible to obtain the complete extraction of the original solvent from the membrane and simultaneously introduce in the membrane's active layer a system which allows the mobility of the molecules so that they can readjust themselves in a more compact and thermodynamically more stable structure. In this manner, the expansion of the membrane does not entail a rejection loss but, on the contrary and surprisingly, an increase therein.

To conclude, the post-treatment according to the invention, in particular when performed with an acetic acid buffer solution, achieves the intended aim and objects.

**Claims**

1. Reverse-osmosis membranes based on pclypiperazinamide, obtainable with a chemical-physical post-treatment of the freshly formed membrane, based on an aqueous solution which acts by extracting the original solvent from the membrane and replacing it at least partially in the membrane's structure.

2. Reverse-osmosis membranes based on polypiperazinamide, obtainable with a chemical-physical post-treatment of the freshly formed membrane, based on a diluted aqueous solution of a strong solvent of the polymer.

3. Reverse-osmosis membranes based on polypiperazinamide, obtainable with a chemical-physical post-treatment of the freshly formed membrane, based on an aqueous solution based on a high-concentration solution of electrolytes.

4. Reverse-osmosis membranes based on polypiperazinamide, obtainable with a chemical-physical post-treatment of the freshly formed membrane, based on an aqueous buffer solution of an organic acid which is a weak solvent of the membrane.

5. Membranes according to claim 4, wherein said weak solvent organic acid is acetic acid.

6. Membrane according to claim 4, wherein said buffer solution has a molar concentration which is comprised between 0.1 and 5 and is preferably comprised between 0,1 and 2.

7. Membrane according to claim 4, wherein said buffer solution contains an acid with a pK comprised between 4 and 10.

8. Membranes according to claim 3, wherein the concentration of said electrolyte solution is comprised between 5% and 30% by weight.

9. Membranes according to claim 2, characterized in that said diluted aqueous solution has a concentration comprised between 0.05 and 0.3 mol/liter.

10. Rolled-spiral modules comprising membranes according to any one of the preceding claims.

11. Hollow fibers formed by membranes according to any one of the preceding claims.

12. Tubular membranes formed by membranes according to any one of the preceding claims.

13. Process for preparing polypiperazinamide-based membranes, comprising the following steps:
    a) preparation of a solution of polypiperazinamide in an original polar solvent;
    b) application of said solution on a support or drawing in the form of a hollow fiber;
    c) partial evaporation of the original solvent;
    d) gelling by phase reversal by passage in a coagulation bath,

    characterized in that it subsequently comprises a chemical-physical post-treatment based on an aqueous solution.

14. Process according to claims 12, wherein said aqueous solution is chosen among:

    a diluted aqueous solution of a strong solvent of the polymer,

an aqueous solution based on a high-concentration solution of electrolytes,

an aqueous buffer solution of an organic acid which is a weak solvent of the membrane.

**15.** Process according to claim 13, wherein said weak solvent organic acid is acetic acid.

**16.** Process according to claims 12, 13 or 14, wherein said post-treatment has a duration in excess of 0.1 minutes and preferably in excess of 1 minute.

Fig. 1

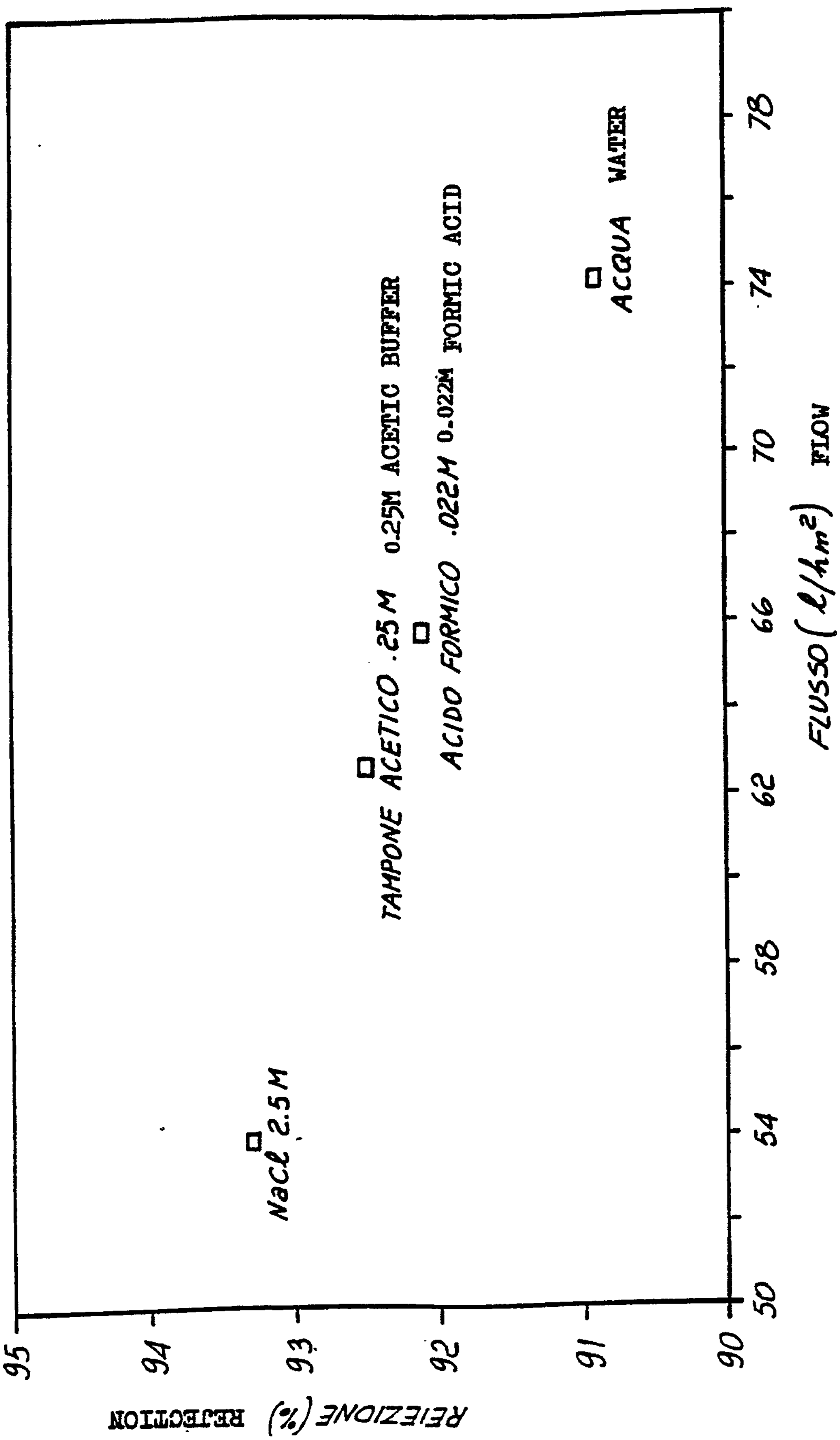
NaCl 2.5 M
TAMPONE ACETICO .25 M 0.25M ACETIC BUFFER
ACIDO FORMICO .022 M 0.022M FORMIC ACID
ACQUA WATER
FLUSSO (l/hm²) FLOW
50
54
58
62
66
70
74
78
RIEZIONE (%) REJECTION
90
91
92
93
94
95

Fig. 2

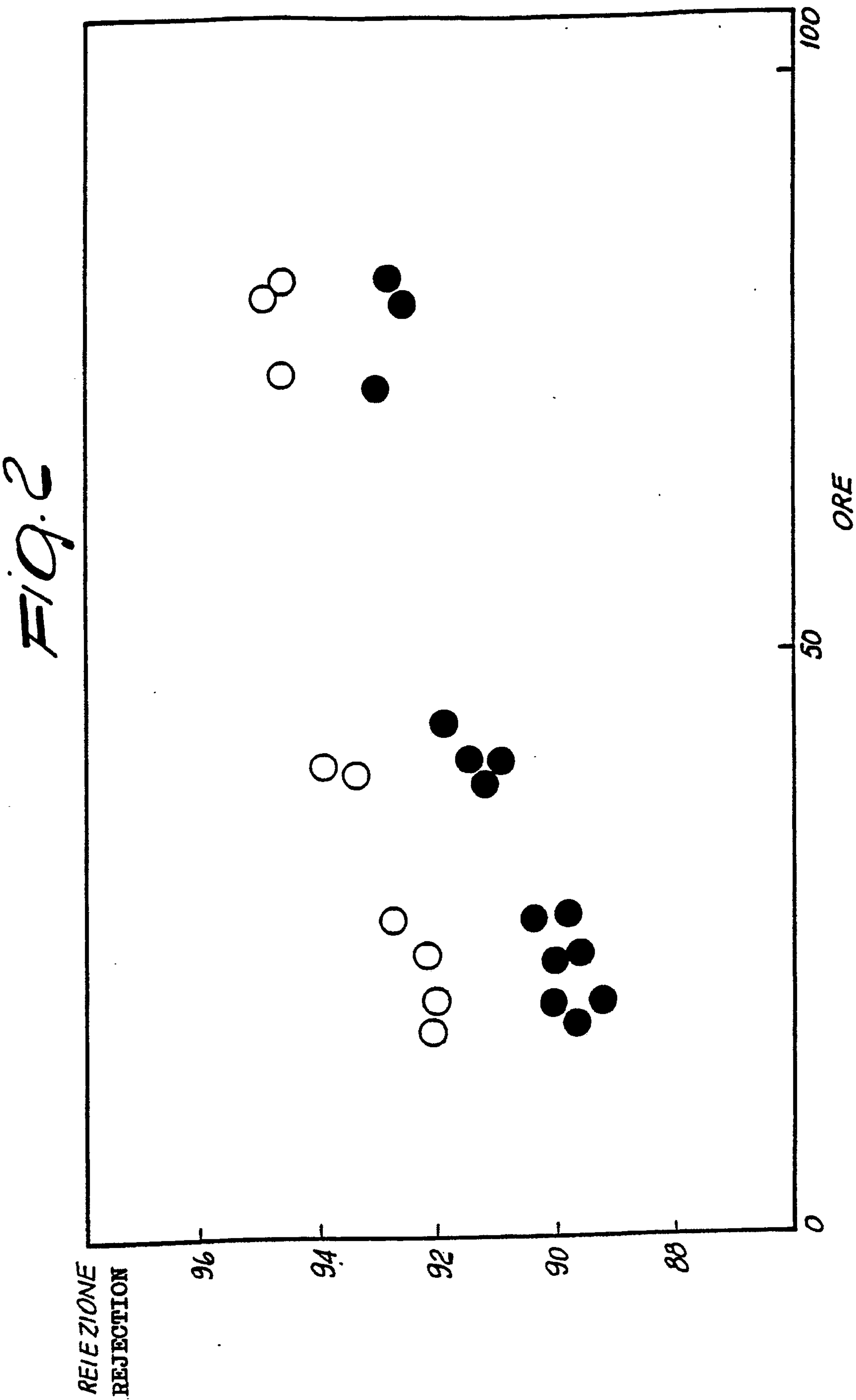

Fig. 3

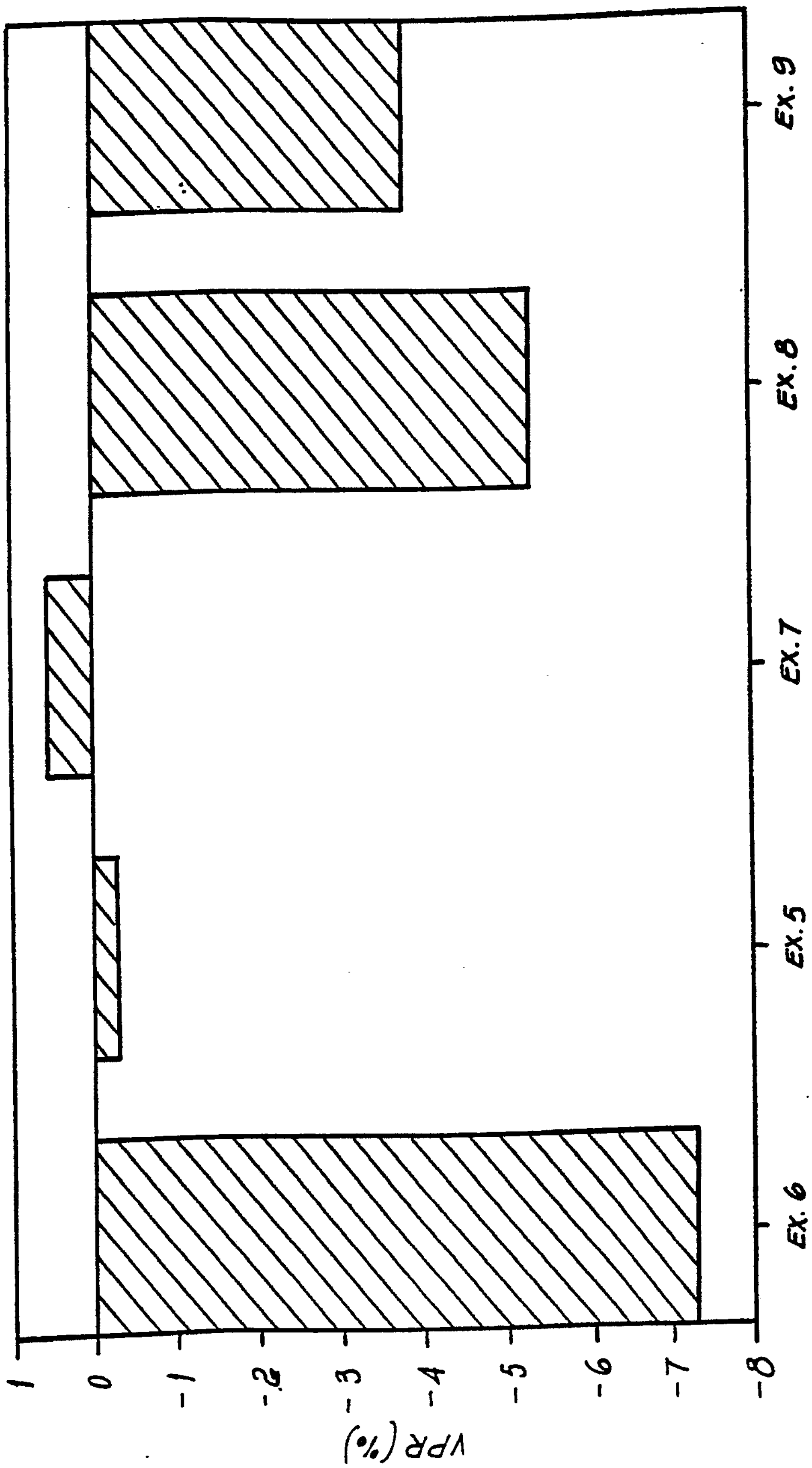

European Patent Office

# EUROPEAN SEARCH REPORT

Application Number

**EP 90 12 4101**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 099 686 (MONTEDISON SpA)<br>* Abstract; claims 1,6-8,12; page 5, line 1 - page 8, line 4; example 5 *<br>- - - | 1-3,8-14 | B 01 D 71/56<br>B 01 D 67/00 |
| A | EP-A-0 357 864 (SEPAREM SpA)<br>* Abstract; claims 1,14,16,17; page 3; lines 28-32 *<br>- - - - - | 1,10,13, 16 | |
| | | | TECHNICAL FIELDS SEARCHED (Int. Cl.5) |
| | | | B 01 D |

The present search report has been drawn up for all claims

| Place of search | Date of completion of search | Examiner |
|---|---|---|
| The Hague | 17 May 91 | HOORNAERT P.G.R.J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document